# FASCICULE DE BREVET EUROPEEN

(11) **EP 2 171 861 B1**
(45) Date de publication et mention de la délivrance du brevet: **12.01.2011**
(21) Numéro de dépôt: 08806028.0
(22) Date de dépôt: 18.06.2008
(51) Int. Cl.: H04B 1/08, B60R 11/02

(54) **AGENCEMENT DE CABLAGE D'UN POSTE DE RADIO POUR VEHICULE AUTOMOBILE**
ANORDNUNG ZUM VERKABELN EINES MOTORFAHRZEUG-FUNKGERÄTES
MOTOR VEHICLE RADIO SET WIRING ARRANGEMENT

(30) Priorité: 31.07.2007 FR 0756834
(43) Date de publication de la demande: 07.04.2010
(73) Titulaire: Renault S.A.S., 92100 Boulogne-Billancourt (FR)
(72) Inventeur: COCHARD, XAVIER, F-78340 Les Clayes Sous Bois (FR)
(86) Numéro de dépôt international: PCT/FR2008/051093
(87) Numéro de publication internationale: WO 2009/019346

(56) Documents cités:
- FR-A- 2 706 092
- US-A- 3 295 905
- US-B1- 6 741 166

## Description

La présente invention concerne un agencement de câblage d'un poste de radio pour véhicule automobile, dans lequel le poste de radio s'étend dans un logement, au moins un câble étant branché sur la face de branchement de la radio, cette face de branchement étant orientée vers le fond du logement, et dans lequel ce au moins un câble est apte à passer à travers une ouverture pour communiquer avec l'extérieur du logement.

De façon connue, une radio est disposée dans un logement aménagé dans la planche de bord du véhicule. La face de branchement du poste de radio est munie de fiches électriques sur lesquelles sont connectés des câbles d'alimentation et de liaison aux hauts parleurs.

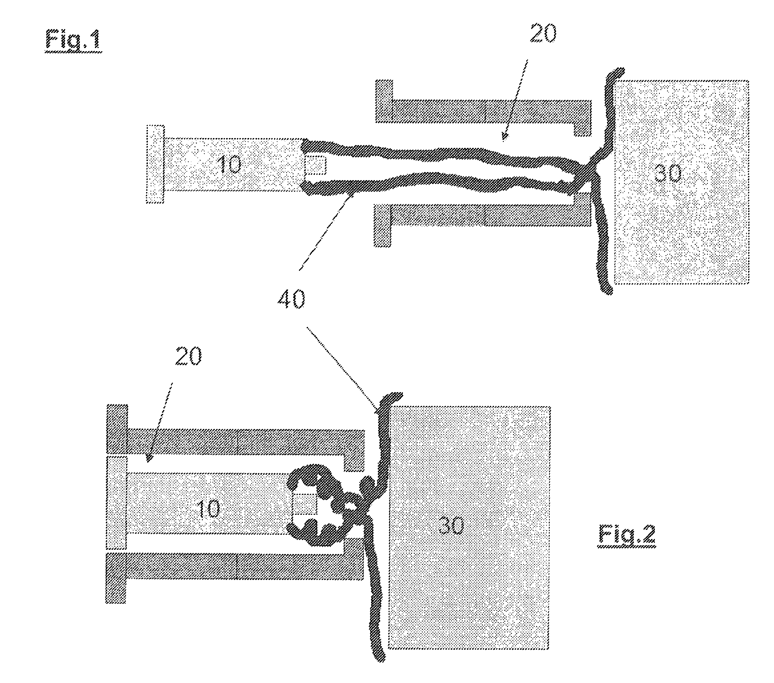

Pour connecter la radio à ces différents câbles, une longueur supplémentaire de câble est prévue de sorte que l'opérateur monteur peut sortir les extrémités des câbles hors du logement, afin de procéder à la connexion hors du corps de la planche de bord. La surlongueur du câblage peut atteindre 200 à 250 mm. Lors de la remise en place de la radio dans son logement dans la planche de bord, les surlongueurs du câblage doivent ensuite s'évacuer à l'arrière du poste de radio. L'architecture et le manque de place à l'arrière de cette radio provoquent des bourrages de ces câbles, qui se forment en retrait de la radio entre le fond du logement et la face inférieure du poste de radio, et qui entraînent des problèmes de montage et des problèmes de finition par désaffleurement de la façade radio d'avec la planche de bord. A titre d'exemple, la figure 1 représente un tel encombrement derrière le poste de radio après montage, et il sera compris que chaque montage entraîne une mise en position différente des câbles, qui peut être amenée sur certains montages à bloquer l'insertion du poste de radio jusqu'au fond du logement par exemple.

Le document US 6 741 166 décrit un exemple d'agencement de câblage d'un poste radio pour véhicule automobile.

Un des objectifs de l'invention est de proposer un agencement de câblage de poste de radio, qui permette un montage facile du poste de radio, et un escamotage des câbles associés qui n'entrave pas la fixation de ce poste de radio.

En outre, en réponse à des objectifs que l'on retrouve invariablement chez les différents constructeurs automobiles, la présente invention se veut également peu coûteuse et peu encombrante.

Pour répondre à ces objectifs, l'invention propose un agencement de câblage de poste de radio du type décrit précédemment et tel que décrit dans la revendication 1, caractérisé en ce que le logement est formé d'une chambre principale dans lequel s'étend en position active le poste de radio, et d'une zone de dégagement décalée verticalement par rapport à la chambre principale, et dans laquelle est formée ladite ouverture.

Selon différentes caractéristiques de la présente invention :
- la position et/ou les dimensions de la zone de dégagement sont telles que l'ouverture est située en avant de la face de branchement lorsque le poste de radio est en position active.
- la zone de dégagement est située au dessus ou au dessous de la chambre principale du logement.
- l'ouverture réalisée dans la zone de dégagement est une ouverture centrale formée dans le fond de la zone de dégagement.
- l'ouverture réalisée dans la zone de dégagement est une ouverture latérale formée dans une des parois latérales de la zone de dégagement.
- deux ouvertures sont réalisées dans la zone de dégagement.
- le câble connecté à la face de branchement du poste de radio est séparé en deux cordons de sorte que chaque cordon passe par une ouverture spécifique.

L'invention vise à protéger également un véhicule automobile du type comportant un poste de radio apte à se loger en position active dans un logement formé dans la planche de bord du véhicule, et dans lequel un agencement de câblage tel que décrit ci dessus est associé au poste de radio.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un agencement de câblage de poste de radio, le poste de radio étant dans une position de montage, selon l'état de la technique ;
- la figure 2 est une représentation schématique de l'agencement de câblage de poste de radio de la figure 1, le poste de radio étant dans une position active ;
- la figure 3 est une représentation schématique d'un agencement de câblage de poste de radio, le poste de radio étant dans une position de montage, selon un mode de réalisation de l'invention ;
- la figure 4 est une représentation schématique de l'agencement de câblage de poste de radio de la figure 3, le poste de radio étant dans une position active.

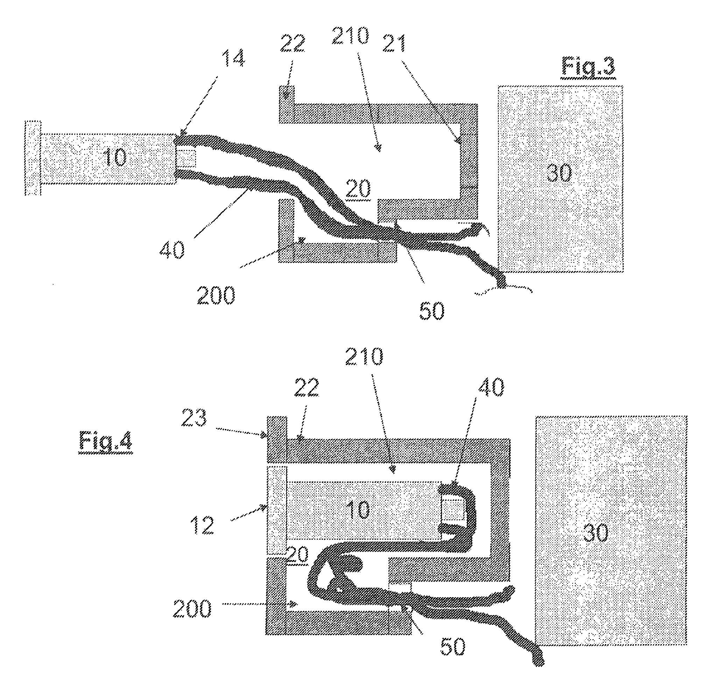

Tel que représenté sur la figure 4, un poste de radio 10 est monté dans un logement 20 réalisé dans la structure de planche de bord 22. La profondeur du logement 20 est telle que la face de commande 12 du poste de radio 10 est affleurante à la surface 23 de la planche de bord 22 lorsque le poste est en position active, monté dans le logement 20. La face de branchement 14 du poste de radio est opposée à la face de commande 12, et est positionnée en regard du fond 21 du logement 20.

Des câbles 40 sont branchés sur la face de branchement 14 du poste de radio 10, de manière à pouvoir alimenter le poste de radio et à transmettre le son vers les hauts parleurs du véhicule. Ces câbles 40, qui présentent une extrémité liée au poste de radio disposé dans le logement 20, se déploient derrière la planche de bord 22. Ils sont ainsi amenés à passer dans au moins un orifice 50 réalisé dans la planche de bord 22. Contrairement à un état de la technique représenté aux figures 1 et 2, dans lequel un tel orifice est réalisé en fond du logement, la présente invention propose un agencement dans lequel cet au moins un orifice 50, par lequel circule au moins un câble 40, est disposé dans une zone de dégagement 200 de la planche de bord 22 qui est décalée verticalement par rapport à la chambre principale 210 formant le logement 20, et dans lequel s'étend le poste de radio 10. Il sera compris que le mode de réalisation représenté montre un décalage vertical de la zone de dégagement 200 tel que cette zone 200 est située sous la chambre principale 210. Toutefois, sans sortir du contexte de l'invention, et si l'architecture de la planche de bord 22 le permet, cette zone de dégagement 200 pourra être située au dessus de la chambre principale 210 sans que les avantages de l'invention décrits ci-dessous soient altérés.

Selon l'invention, l'ouverture 50 par laquelle le ou les câbles 40 passent pour communiquer avec des éléments externes à la planche de bord 22, est située dans la zone de dégagement 200. Selon différents modes de réalisation, une ouverture unique peut être aménagée dans la zone de dégagement 200, ou bien deux ouvertures latérales et/ou centrales peuvent être aménagées dans cette même zone de dégagement 200. Dans ce dernier cas de deux ouvertures, une dérivation de câble est effectuée en deux cordons principaux, un cordon s'engageant dans chaque ouverture.

L'ouverture 50, latérale ou centrale est réalisée dans une face de la zone de dégagement 200, respectivement dans une face latérale ou la face transversale la plus proche du fond du logement 20.

Selon l'invention, la présence d'une zone de dégagement 200 ouverte sur le logement 20 du poste de radio 10 permet de gérer la surlongueur des câbles 40, de sorte que cette surlongueur n'est plus bourrée dans le fond du logement 20 de la radio 10 mais prise en charge selon une composante verticale entre le poste de radio 10 et le corps de planche de bord 22.

Avantageusement, la zone de dégagement 200 est disposée sous la partie avant du logement 20, la partie avant du logement 20 étant la partie orientée vers l'habitacle, de sorte que le bourrage des câbles 40 n'ait pas lieu à proximité du fond du logement 20. En effet, dans un mode de réalisation tel que représenté à la figure 4, le fait d'enfoncer en position le poste de radio 10 permet dans un premier temps de pousser les câbles vers l'extérieur du logement 20, et d'évacuer ainsi du logement 20 une partie de la surlonguer de câble, puis dans un deuxième temps, dès lors que le poste de radio 10 est enfoncé suffisamment pour que la face de branchement 14 ait dépassé l'ouverture 50, de tirer la longueur de câble restante dans le logement 20 et d'avoir ainsi des câbles tendus à proximité des branchements du poste de radio 10. A cet effet, la position de la zone de dégagement 200, sous la partie avant du logement 20, et la dimension de cette zone de dégagement 200, sont telles que l'ouverture 50 est plus proche du plan de la surface 23 de la planche de bord 22 que la face de branchement 14 du poste de radio 10 lorsque celui-ci est en position active dans le logement 20.

## Revendications

1. Agencement de câblage d'un poste de radio (10) pour véhicule automobile, dans lequel le poste de radio (10) s'étend dans un logement (20) réalisé dans la planche de bord (23), au moins un câble (40) étant branché sur la face de branchement (14) de la radio, cette face de branchement (14) étant orientée vers le fond (21) du logement (20), et dans lequel ce au moins un câble (40) est apte à passer à travers une ouverture (50) pour communiquer avec l'extérieur du logement (20), le logement (20) étant formé d'une chambre principale (210) dans lequel s'étend en position active le poste de radio (10), et d'une zone de dégagement (200) décalée verticalement par rapport à la chambre principale (210), et dans laquelle est formée ladite ouverture (50),
**caractérisé en ce que** la position et/ou les dimensions de la zone de dégagement (200) sont telles que l'ouverture (50) est plus proche du plan de la surface (23) de la planche de bord (22) que la face de branchement (14) du poste de radio (10) lorsque celui-ci est en position active dans le logement (20).

2. Agencement de câblage selon la revendication 1, **caractérisé en ce que** la zone de dégagement (200) est située au dessous de la chambre principale (210) du logement (20).

3. Agencement de câblage selon la revendication 1 ou 2, **caractérisé en ce que** l'ouverture (50) réalisée dans la zone de dégagement (200) est une ouverture centrale formée dans le fond de la zone de dégagement (200).

4. Agencement de câblage selon la revendication 1 ou 2, **caractérisé en ce que** l'ouverture (50) réalisée dans la zone de dégagement (200) est une ouverture latérale formée dans une des parois latérales de la zone de dégagement (200).

5. Agencement de câblage selon la revendication 1, **caractérisé en ce que** deux ouvertures sont réalisées dans la zone de dégagement (200).

6. Agencement de câblage selon la revendication 5, **caractérisé en ce que** le câble (40) connecté à la face de branchement (14) du poste de radio (10) est séparé en deux cordons de sorte que chaque cordon passe par une ouverture spécifique.

7. Véhicule automobile du type comportant un poste de radio (10) apte à se loger en position active dans un logement (20) formé dans la planche de bord (22) du véhicule, et dans lequel un agencement de câblage selon l'une des revendications précédentes est associé au poste de radio (10).

## Claims

1. Wiring arrangement for wiring a radio set (10) for a motor vehicle, in which the radio set (10) extends into a housing (20) made in the dashboard (22), at least one cable (40) being connected to the connection face (14) of the radio, this connection face (14) being oriented towards the back (21) of the housing (20), and in which this at least one cable (40) is capable of running through an opening (50) in order to communicate with the outside of the housing (20), the housing (20) being formed of a main chamber (210) into which the radio set (10) extends in the active position, and of a clearance zone (200) offset vertically relative to the main chamber (210), and in which the said opening (50) is formed, **characterized in that** the position and/or the dimensions of the clearance zone (200) are such that the opening (50) is closer to the plane of the surface (23) of the dashboard (22) than the connection face (14) of the radio set (10) when the latter is in the active position in the housing (20).

2. Wiring arrangement according to Claim 1, **characterized in that** the clearance zone (200) is situated beneath the main chamber (210) of the housing (20).

3. Wiring arrangement according to Claim 1 or 2, **characterized in that** the opening (50) made in the clearance zone (200) is a central opening formed in the back of the clearance zone (200).

4. Wiring arrangement according to Claim 1 or 2, **characterized in that** the opening (50) made in the clearance zone (200) is a lateral opening formed in one of the lateral walls of the clearance zone (200).

5. Wiring arrangement according to Claim 1, **characterized in that** two openings are made in the clearance zone (200).

6. Wiring arrangement according to Claim 5, **characterized in that** the cable (40) connected to the connection face (14) of the radio set (10) is separated into two leads so that each lead passes through a specific opening.

7. Motor vehicle of the type comprising a radio set (10) capable of being housed in the active position in a housing (20) formed in the dashboard (22) of the vehicle, and in which a wiring arrangement according to one of the preceding claims is associated with the radio set (10).

## Patentansprüche

1. Verkabelungsanordnung eines Radiogeräts (10) für ein Kraftfahrzeug, wobei das Radiogerät (10) sich in einer im Armaturenbrett (22) ausgeführten Aufnahme (20) erstreckt, wobei mindestens ein Kabel (40) an die Anschlussseite (14) des Radios angeschlossen ist, wobei diese Anschlussseite (14) zum Boden (21) der Aufnahme (20) gerichtet ist, und wobei dieses mindestens eine Kabel (40) eine Öffnung (50) durchqueren kann, um mit der Außenumgebung der Aufnahme (20) in Verbindung zu treten, wobei die Aufnahme (20) von einer Hauptkammer (210), in der sich in der aktiven Stellung das Radiogerät (10) erstreckt, und von einer Freiraumzone (200) gebildet wird, die senkrecht bezüglich der Hauptkammer (210) versetzt ist und in der die Öffnung (50) geformt ist,
**dadurch gekennzeichnet, dass** die Stellung und/oder die Abmessungen der Freiraumzone (200) derart sind, dass die Öffnung (50) der Ebene der Fläche (23) des Armaturenbretts (22) näher ist als die Anschlussseite (14) des Radiogeräts (10), wenn dieses in der aktiven Stellung in der Aufnahme (20) ist.

2. Verkabelungsanordnung nach Anspruch 1, **dadurch gekennzeichnet, dass** die Freiraumzone (200) sich unter der Hauptkammer (210) der Aufnahme (20) befindet.

3. Verkabelungsanordnung nach Anspruch 1 oder 2, **dadurch gekennzeichnet, dass** die in der Freiraumzone (200) ausgeführte Öffnung (50) eine zentrale Öffnung ist, die im Boden der Freiraumzone (200) geformt ist.

4. Verkabelungsanordnung nach Anspruch 1 oder 2, **dadurch gekennzeichnet, dass** die in der Freiraumzone (200) ausgeführte Öffnung (50) eine seitliche Öffnung ist, die in einer der Seitenwände der Freiraumzone (200) geformt ist.

5. Verkabelungsanordnung nach Anspruch 1, **dadurch gekennzeichnet, dass** zwei Öffnungen in der Freiraumzone (200) ausgeführt sind.

6. Verkabelungsanordnung nach Anspruch 5, **dadurch gekennzeichnet, dass** das mit der Anschlussseite (14) des Radiogeräts (10) verbundene Kabel (40) in zwei Litzen aufgeteilt ist, so dass jede Litze durch eine spezifische Öffnung geht.

7. Kraftfahrzeug von der Art, die ein Radiogerät (10) aufweist, das in der aktiven Stellung in eine im Armaturenbrett (22) des Fahrzeugs geformte Aufnahme (20) eingesetzt werden kann, und bei der eine Verkabelungsanordnung nach einem der vorhergehenden Ansprüche dem Radiogerät (10) zugeordnet ist.
